# FASCICULE DE BREVET EUROPEEN

(11) **EP 1 916 328 B1**
(45) Date de publication et mention de la délivrance du brevet: **21.06.2017**
(21) Numéro de dépôt: 07119196.9
(22) Date de dépôt: 24.10.2007
(51) Int. Cl.: D06F 58/28, D06F 25/00

(54) **Procédé de séchage du linge d'une machine à sécher le linge**
Verfahren zum Trocknen von Wäsche in einem Wäschetrockner
Method of drying laundry in a drying machine

(30) Priorité: 25.10.2006 FR 0609485
(43) Date de publication de la demande: 30.04.2008
(73) Titulaire: Groupe Brandt, 92500 Rueil-Malmaison (FR)
(72) Inventeur: Burgain, Thierry, 38090 Roche (FR)

(56) Documents cités:
- EP-A1- 0 761 864
- EP-A1- 0 937 810
- CH-A5- 659 841
- DE-A1- 1 924 961
- DE-A1- 10 304 300
- GB-A- 2 308 430
- US-A1- 2005 028 400

## Description

La présente invention concerne d'une part une machine à sécher le linge.

Elle concerne également un procédé de séchage du linge d'une machine à sécher le linge de manière à suspendre le linge à l'intérieur du tambour entraîné en rotation au cours d'une phase de séchage utilisant une circulation d'air chaud au travers dudit tambour. Et d'autre part, la présente invention concerne une machine à sécher le linge adaptée à mettre en oeuvre le procédé de séchage du linge conforme à l'invention. Ce procédé permet de réaliser le séchage du linge en un temps minimum et en évitant le froissage du linge.

De manière générale, l'invention concerne les machines à sécher le linge, et plus particulièrement les machines à sécher le linge à usage domestique.

On connaît des machines à sécher le linge comprenant un tambour relié par une première conduite de ventilation à un ventilateur et ce dernier est relié au tambour par une seconde conduite de ventilation. Le ventilateur introduit à l'intérieur du tambour de l'air chauffé par un élément chauffant se situant dans la seconde conduite de ventilation. Le tambour comprend des orifices permettant l'introduction d'air chaud et l'évacuation de l'air chargé en humidité.

Cependant, ces machines à sécher le linge présentent l'inconvénient de proposer des cycles de séchage où le linge est satellisé sur les parois du tambour afin d'évacuer l'humidité. La satellisation du linge a pour but de mettre en pression le linge contre la virole du tambour et d'extraire l'humidité du linge. Ces phases de satellisation consistant à plaquer le linge contre la virole du tambour sont alternées avec des phases de brassage du linge. Ces phases de brassage du linge permettent de distribuer la charge de linge à l'intérieur du tambour et de modifier la répartition du linge à l'intérieur de ce dernier. Ces cycles de séchage ne sont pas économiques étant donné que le passage de l'air de séchage à l'intérieur du tambour est fortement ralenti par la présence du linge sur les parois du tambour lors des phases de satellisation. La surface de contact entre l'air chaud introduit dans le tambour et la charge de linge est faible et ne permet pas un séchage rapide du linge.

Par ailleurs, ces procédés de séchage présentent l'inconvénient de froisser le linge lors des phases de satellisation par la force centrifuge exercée sur le linge et lors des phases de brassage où les pièces de linge tombent les unes sur les autres.

En outre, les phases de satellisation du linge ont tendance à détériorer les pièces de linge à cause de la forte vitesse de rotation du tambour.

On connaît d'autre part le document EP-A1-0 761 864 qui décrit un procédé de séchage d'une machine à sécher le linge. Le linge contenu dans le tambour forme à la périphérie dudit tambour une couronne en étant satellisé. Une injection d'air est ménagée au centre du tambour de manière à former un tunnel traversant le tambour d'un côté à l'autre suivant l'axe horizontal dudit tambour. Puis l'air introduit dans le tambour suivant l'axe de rotation dudit tambour est évacué vers l'extérieur par l'intermédiaire des orifices ménagés sur la périphérie du tambour en traversant les pièces de linge.

Le procédé de séchage décrit dans le document EP-A1-0 761 864 présente l'inconvénient de former une couronne de linge à l'intérieur du tambour entre la périphérie dudit tambour et un tunnel de circulation d'air selon l'axe de rotation dudit tambour. Par conséquent, le linge est tassé entre les parois définies par la périphérie du tambour et le tunnel de circulation d'air. Le procédé de séchage du linge ne permet pas d'éviter le froissage. Les pièces de linge contenues dans le tambour sont proches les unes des autres et par conséquent la surface de contact de l'air chaud avec celles-ci est diminuée. Les performances de séchage ne sont donc pas optimales.

La présente invention a pour but de résoudre les inconvénients précités et de proposer un procédé de séchage du linge d'une machine à sécher le linge permettant d'améliorer les performances de séchage tout en minimisant les consommations d'énergie. Ce procédé de séchage permet également d'éviter le froissage du linge.

A cet effet, la présente invention vise un procédé de séchage du linge d'une machine à sécher le linge comprenant un tambour rotatif, ledit tambour étant logé à l'intérieur d'une carrosserie et contenant le linge à sécher, ledit tambour étant relié à au moins un ventilateur par une conduite, et ledit au moins un ventilateur étant relié audit tambour par une conduite.

Selon l'invention, le procédé de séchage du linge comporte simultanément :
- une mise en suspension du linge dans le tambour entraîné en rotation ; et
- une circulation d'air chaud traversant ledit tambour.

Ainsi, le procédé de séchage du linge permet de mettre en suspension les pièces de linge à l'intérieur du tambour par la mise en rotation dudit tambour. Les pièces de linge sont faiblement en contact entre elles. Par conséquent, la surface de contact avec l'air chaud traversant le tambour est maximale et permet d'améliorer les performances de séchage.

La vitesse de rotation du tambour pendant la phase de suspension du linge est déterminée pour éviter que le linge tombe vers la partie inférieure dudit tambour et pour éviter que le linge soit satellisé sur la virole dudit tambour.

Le linge est maintenu constamment en suspension à l'intérieur du tambour au cours de la phase de suspension du linge.

Selon une caractéristique avantageuse de l'invention, la phase de suspension du linge est précédée d'une étape de recherche de la phase de suspension du linge.

Ainsi, la machine à sécher le linge détecte une phase où le linge est en suspension dans le tambour pour un palier de vitesse de rotation du tambour. Ledit palier de vitesse de rotation du tambour est propre à chaque charge de linge.

Le procédé de séchage du linge d'une machine à sécher le linge est mis en oeuvre rapidement pour sécher le linge efficacement et permet d'obtenir un résultat fiable et constant.

La charge de linge est uniformément répartie à l'intérieur du tambour pour ne pas engendrer un balourd. Une montée en vitesse de rotation du tambour peut être réalisée en toute sécurité et sans risques d'endommagement de la machine à sécher le linge à la suite de la phase de suspension du linge.

Selon une autre caractéristique avantageuse de l'invention, la phase de suspension du linge est fonction de la charge de linge et comprise dans une plage de vitesse de rotation du tambour s'étendant entre un premier palier V₁ et un second palier V₂.

D'une part, une phase de brassage du linge est dépassée dès le franchissement d'un premier palier V₁ de vitesse de rotation du tambour. La phase de brassage du linge permet d'entraîner le linge par les parois du tambour et celui-ci retombe lorsqu'il est en position haute. Dans le cas du brassage du linge, la force centrifuge exercée sur le linge est inférieure à la force de la gravité. Et d'autre part, la phase de satellisation du linge est atteinte dès le dépassement d'un second palier V₂ de vitesse de rotation du tambour. Lors de la phase de satellisation du linge, les pièces de linge sont plaquées contre les parois du tambour et sont immobiles par rapport à ce dernier.

Entre les deux phases de brassage et de satellisation du linge, une vitesse de rotation propre à chaque charge de linge existe où le linge est en suspension dans le tambour. Les pièces de linge les plus proches de la virole du tambour peuvent être satellisées. Lors de cette phase de suspension du linge, les pièces de linge ne retombent pas dans la partie inférieure du tambour.

La vitesse de rotation du tambour correspondant à la phase de suspension du linge à l'intérieur du tambour est différente pour l'ensemble des charges de linge et propre à chacune de ces charges de linge.

Dès que la phase de détection du linge en suspension dans le tambour est atteinte, la vitesse de rotation du tambour est maintenue à l'intérieur de la plage de vitesse de rotation du tambour correspondant à la phase de suspension du linge.

De cette manière, le linge ne subit pas de froissage lors de la phase de suspension du linge.

D'autres particularités et avantages de l'invention apparaîtront encore dans la description ci-après.

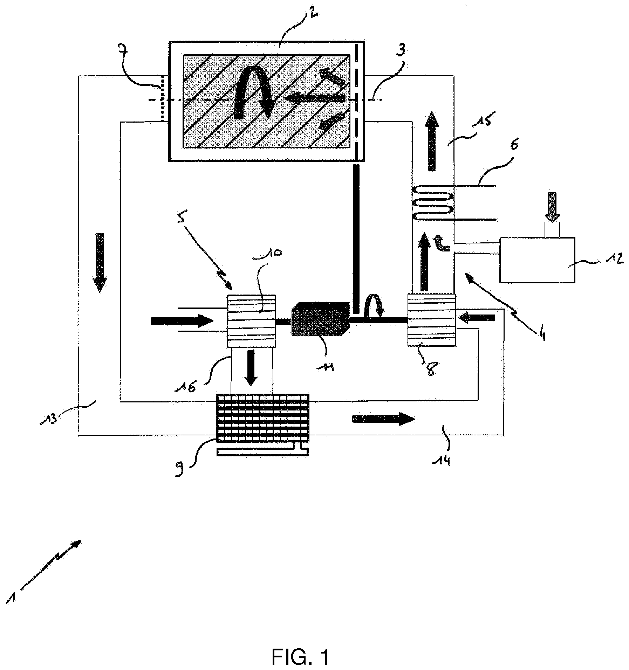

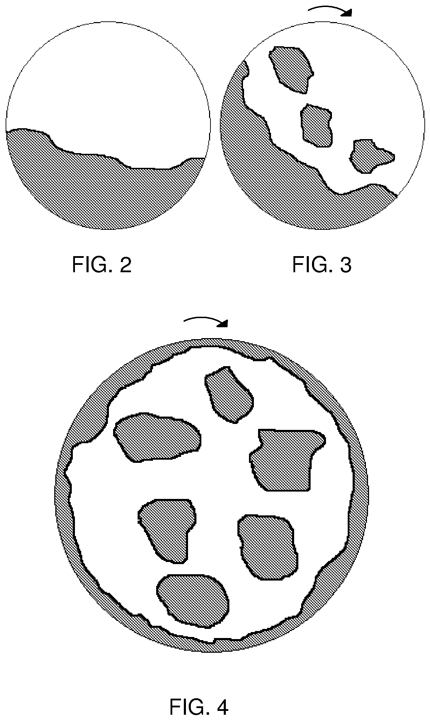

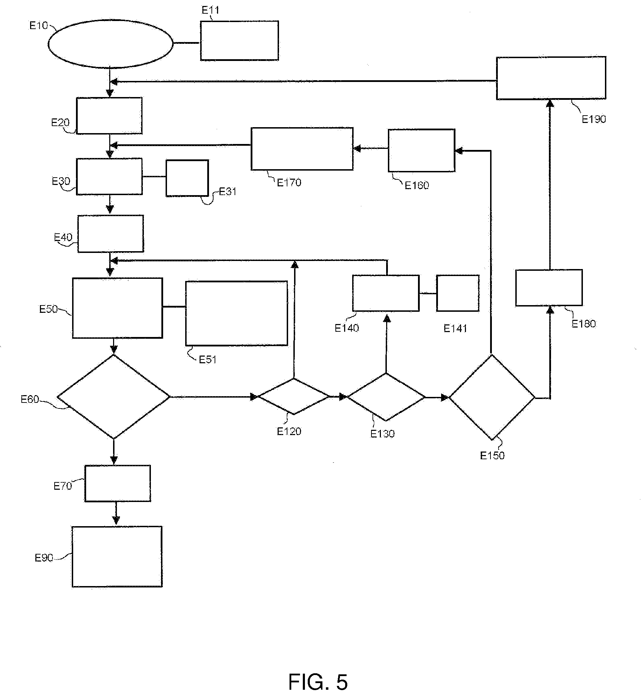

Aux dessins annexés, donnés à titre d'exemples non limitatifs :
∘ la figure 1 illustre une machine à sécher le linge adaptée à mettre en oeuvre le procédé de répartition du linge conforme à l'invention ;
∘ la figure 2 illustre une vue en coupe d'un tambour de machine à sécher le linge où le tambour est à l'arrêt ;
∘ la figure 3 illustre une vue en coupe d'un tambour de machine à sécher le linge où le tambour est entraîné en rotation au cours d'une phase de brassage ;
∘ la figure 4 illustre une vue en coupe d'un tambour de machine à sécher le linge où le linge est en suspension à l'intérieur du tambour ; et
∘ la figure 5 est un algorithme décrivant le procédé de répartition du linge conforme à l'invention.

On va décrire tout d'abord en référence à la figure 1 une machine à sécher le linge 1 conforme à l'invention.

Cette machine à sécher le linge peut être une machine à sécher le linge à usage domestique ou une lavante-séchante.

On a illustré sur ce mode de réalisation une machine à chargement par le dessus. Bien entendu, la présente invention s'applique à tous les types de machine à sécher le linge, et notamment à chargement frontal.

Cette machine à sécher le linge 1 comporte une carrosserie comprenant une ouverture d'accès à l'intérieur de la carrosserie. Dans les machines à chargement par le dessus, cette ouverture d'accès est réalisée dans une portion supérieure de la carrosserie, et dans cet exemple, dans un plan supérieur de la carrosserie.

Une porte d'accès est adaptée à obturer cette ouverture de la carrosserie de la machine 1, notamment lors du fonctionnement de celle-ci.

Dans cet exemple de réalisation, et de manière nullement limitative, la porte d'accès est montée pivotante autour d'un axe de rotation solidaire de la carrosserie de la machine 1.

La carrosserie de la machine 1 est adaptée à loger un tambour 2 qui est adapté notamment à sécher le linge par une circulation d'air chaud. Le tambour 2 est mobile en rotation autour d'un axe 3 lors des différentes phases des cycles de séchage de la machine.

On notera que la figure 1 est schématique et que de nombreux organes nécessaires au fonctionnement de la machine ont été omis et n'ont pas besoin d'être décrits en détail ici.

Afin de permettre l'introduction et le retrait du linge à l'intérieur du tambour rotatif 2, celui-ci comporte de manière connue une porte. Cette porte d'accès, par exemple formée de deux portillons et montés en pivotement sur la virole du tambour 2, permet de fermer une ouverture ménagée dans ladite virole dudit tambour 2.

Un tableau de commande est également prévu en partie supérieure de la machine 1.

Seuls les moyens spécifiques à la mise en oeuvre du procédé de séchage du linge conforme à l'invention seront décrits ci-après.

Bien entendu, la machine à sécher le linge conforme à l'invention comporte l'ensemble des équipements et moyens nécessaires à la mise en oeuvre d'un processus de séchage classique dans une telle machine à tambour rotatif.

On va décrire à présent une machine à sécher le linge à condenseur adaptée à mettre en oeuvre le procédé de séchage du linge conforme à l'invention, en référence à la figure 1.

Une machine à sécher le linge 1 à condenseur comprend deux circuits d'air. Un premier circuit d'air est communément appelé circuit d'air chaud 4 et un second circuit d'air appelé circuit d'air froid 5.

Le circuit d'air chaud 4 est en boucle fermée et l'air chauffé par au moins un élément chauffant 6. L'air chauffé traverse le linge contenu dans le tambour 2 et l'air chauffé se charge de l'humidité contenue par le linge. Lors de cette phase, l'air est refroidi d'une température de l'ordre de 110 °C à une température de l'ordre de 70 °C.

L'air chauffé et humide traverse un filtre 7 placé à une sortie d'évacuation du tambour 2 pour récupérer les peluches contenues dans ledit air chauffé et humide. Un ventilateur 8 fait circuler l'air chaud et humide à l'intérieur d'un condenseur 9. L'air chaud et humide est refroidi dans des tubes du condenseur 9 et l'humidité de l'air est condensée. Le condenseur 9 est refroidi par échange de chaleur avec de l'air ambiant. Puis, l'air est de nouveau chauffé par ledit au moins un élément chauffant 6.

La machine à sécher le linge 1 peut également être pourvue d'un condenseur 9 à plaques à la place d'un condenseur 9 à tubes.

Le circuit d'air froid 5 est en circuit ouvert où de l'air ambiant est aspiré par un ventilateur 10 à l'arrière de la machine à sécher le linge 1. Le ventilateur 10 propulse l'air ambiant dans le condenseur 9 sur l'extérieur des tubes dudit condenseur 9 afin de le refroidir. L'air ambiant réchauffé dans le condenseur 9 est évacué dans une pièce par une face frontale de la machine à sécher le linge 1.

Un moteur 11 permet l'entraînement du tambour 2 pour le brassage du linge avec une rotation alternée afin d'éviter le nouage du linge. Ledit moteur 11 peut également entraîner les deux ventilateurs 8 et 10.

Suivant les modes de réalisation de l'invention, le moteur 11 peut entraîner le tambour 2 et au moins un ventilateur 8 du circuit de ventilation de manière dépendante ou encore de manière indépendante.

Les deux ventilateurs 8 et 10 sont de technologie centrifuge. Le débit d'air est plus important dans un sens dit positif par rapport à un sens inversé dit négatif. Le facteur de débit d'air entre le sens positif et le sens négatif des ventilateurs 8 et 10 est sensiblement de l'ordre de 3.

L'eau récupérée par le condenseur 9 peut être relevée par une pompe vers un bac placé en partie haute de la machine 1, soit récupérée par gravité dans un bac en partie basse de la machine 1 en fonction de ladite machine à sécher le linge 1.

On va décrire à présent le procédé de séchage du linge conforme à l'invention, en référence aux figures 1 à 4.

Le procédé de séchage du linge comporte simultanément :
- une mise en suspension du linge dans le tambour 2 entraîné en rotation ; et
- une circulation d'air chaud traversant ledit tambour 2.

Ainsi, le procédé de séchage du linge permet de mettre en suspension les pièces de linge à l'intérieur du tambour 2 par la mise en rotation dudit tambour 2. Les pièces de linge sont faiblement en contact entre elles. Par conséquent, la surface de contact avec l'air chaud traversant le tambour 2 est maximale et permet d'améliorer les performances de séchage.

La vitesse de rotation du tambour 2 pendant la phase de suspension du linge est déterminée pour éviter que le linge tombe vers la partie inférieure dudit tambour 2 et pour éviter que le linge soit satellisé sur la virole dudit tambour 2.

Le linge est maintenu constamment en suspension à l'intérieur du tambour 2 au cours de la phase de phase de suspension du linge.

La phase de suspension du linge est précédée d'une étape de recherche de la phase de suspension du linge.

Ainsi, la machine à sécher le linge 1 détecte une phase où le linge est en suspension dans le tambour 2 pour un palier de vitesse de rotation du tambour. Ledit palier de vitesse de rotation du tambour est propre à chaque charge de linge.

Le procédé de séchage du linge d'une machine à sécher le linge 1 est mis en oeuvre rapidement pour sécher le linge efficacement et permet d'obtenir un résultat fiable et constant.

La phase de suspension du linge est fonction de la charge de linge et comprise dans une plage de vitesse de rotation du tambour 2 s'étendant entre un premier palier V₁ et un second palier V₂.

D'une part, une phase de brassage du linge est dépassée dès le franchissement d'un premier palier V₁ de vitesse de rotation du tambour 2. La phase de brassage du linge permet d'entraîner le linge par les parois du tambour 2 et celui-ci retombe lorsqu'il est en position haute. Dans le cas du brassage du linge, la force centrifuge exercée sur le linge est inférieure à la force de la gravité. Et d'autre part, la phase de satellisation du linge est atteinte dès le dépassement d'un second palier V₂ de vitesse de rotation du tambour 2. Lors de la phase de satellisation du linge, les pièces de linge sont plaquées contre les parois du tambour 2 et sont immobiles par rapport à ce dernier.

Entre les deux phases de brassage et de satellisation du linge, une vitesse de rotation propre à chaque charge de linge existe où le linge est en suspension dans le tambour 2. Les pièces de linge les plus proches de la virole du tambour 2 peuvent être satellisées. Lors de cette phase de suspension du linge, les pièces de linge ne retombent pas dans la partie inférieure du tambour 2.

La vitesse de rotation du tambour 2 correspondant à la phase de suspension du linge à l'intérieur du tambour 2 est différente pour l'ensemble des charges de linge et propre à chacune de ces charges de linge.

Dès que la phase de détection du linge en suspension dans le tambour 2 est atteinte, la vitesse de rotation du tambour 2 est maintenue à l'intérieur de la plage de vitesse de rotation du tambour 2 correspondant à la phase de suspension du linge.

De cette manière, le linge ne subit pas de froissage lors de la phase de suspension du linge.

Une mesure de variation de vitesse autour de la vitesse de rotation de consigne peut être mise en oeuvre au cours de l'étape de détection de la phase de suspension du linge et de la phase de suspension du linge permettant le séchage du linge.

La phase de suspension du linge permet d'obtenir une faible variation de vitesse pour permettre de sécher le linge dans les meilleures conditions.

Lors de la phase de brassage du linge inférieure à un premier palier V₁ de vitesse de rotation du tambour 2, des pièces de linge tombent de la partie supérieure vers la partie inférieure du tambour 2 et perturbent la rotation du tambour 2. La mesure de variation de vitesse met en évidence de fortes valeurs et de fortes fluctuations de vitesse à différents instants de la rotation du tambour 2.

Suite à la phase de détection du linge en suspension, le linge est maintenu en suspension à l'intérieur du tambour en conservant la vitesse de rotation du palier sur lequel la suspension du linge a été détectée. Les mesures de variation de vitesse aux différents instants de rotation du tambour 2 lors de la phase de suspension du linge sont faibles du fait que la répartition du linge est uniforme.

Dans la plage de vitesse de rotation du tambour 2 comprise entre un premier palier V₁ et un second palier V₂ correspondant à la phase de suspension du linge, le linge ne retombe pas de la partie supérieure vers la partie inférieure à l'intérieur du tambour 2. Une partie du linge proche de la virole du tambour 2 peut être éventuellement satellisée. La rotation du tambour 2 s'effectue sans perturbations. Au cours de cette phase de suspension du linge, les valeurs successives des mesures de variation de vitesse sont faibles quelque soit l'instant de la rotation du tambour 2.

La phase de détection de la suspension du linge à l'intérieur du tambour 2 est mise en oeuvre jusqu'à ce que la mesure de variation de vitesse générée par une mauvaise répartition du linge soit inférieure à au moins un seuil L prédéterminé.

La mesure de variation de vitesse est connue par l'homme de l'art et peut être mise en oeuvre selon des modes de réalisation différents, tel que par exemple par une mesure de variation d'un paramètre électrique du moteur, tel que le courant ou la puissance, ou par une mesure de vibration sur les paliers de tambour, ou tout autre dispositif généralement utilisé pour la mesure de balourd.

Dans un premier mode de réalisation de l'invention, l'étape de détection du linge en suspension dans le tambour 2 est réalisée suivant une incrémentation d'un pas de vitesse de rotation dudit tambour 2.

Le pas d'incrémentation de la vitesse de rotation peut être de l'ordre de 5 tours par minute.

Dans un second mode de réalisation de l'invention, l'étape de détection du linge en suspension dans le tambour 2 est réalisée suivant une rampe croissante de vitesse de rotation dudit tambour 2.

La détection de la phase en suspension du linge peut être obtenue par la mesure de la variation de vitesse de rotation du tambour 2 entre une valeur de consigne et une valeur mesurée.

En pratique, l'étape de détection du linge en suspension dans le tambour 2 est en fonction de la charge de linge sur une plage de vitesse de rotation du tambour 2 comprise entre un premier palier V₁ et un second palier V₂.

Le premier palier V₁ de vitesse de rotation du tambour est sensiblement compris entre 35 et 55 tours par minute, et préférentiellement de l'ordre de 40 tours par minute. C'est la vitesse de rotation du tambour 2 correspondant à la phase de suspension d'une petite charge de linge, c'est-à-dire avec un faible nombre de pièces de linge.

Le second palier V₂ de vitesse de rotation du tambour 3 est sensiblement compris entre 65 et 75 tours par minute, et préférentiellement de l'ordre de 70 tours par minute. C'est la vitesse de rotation du tambour 2 correspondant à la phase de suspension d'une charge de linge maximale définie par le fabricant de machines.

Le procédé de séchage du linge dans une machine à sécher le linge 1 suit les étapes suivantes au cours de son déroulement :
- lors de la première étape de recherche d'un palier de vitesse où le linge étant en suspension pour une vitesse de rotation correspondant à un premier palier V₁ de vitesse de rotation du tambour 2, si une mesure de variation de vitesse est supérieure à un seuil L prédéterminé alors de nouvelles mesures de variation de vitesse sont effectuées selon un nombre prédéterminé.
- si pour toutes les mesures précédentes, la condition traduisant la suspension du linge est non remplie, c'est-à-dire la mesure est inférieure au seuil L, la vitesse de rotation du tambour 2 est augmentée d'un incrément prédéterminé, et les mesures de variation de vitesse précédentes sont répétées. Cette étape est répétée tant que la vitesse de rotation du tambour 2 n'atteint pas le palier de vitesse V₂.
- si pour l'une des détections précédentes, la mesure de variation de vitesse de rotation du tambour 2 est inférieure à un seuil L prédéterminé, la vitesse de rotation du tambour 2 est maintenue pour conserver l'état de suspension du linge à l'intérieur du tambour 2.
- si lorsque la vitesse de rotation du tambour 2 atteint le palier V₂ et que toutes les détections précédentes, la mesure de variation de vitesse de rotation du tambour 2 est supérieure à un seuil L prédéterminé, alors la vitesse de rotation du tambour 2 est diminuée à un palier de vitesse V₃ correspondant à une vitesse de brassage de la charge de linge de manière à redistribuer les pièces de linge à l'intérieur dudit tambour 2.
- ladite phase de brassage est suivie par la reprise de la première étape de recherche d'un palier de vitesse où le linge étant en suspension dudit procédé tant que les conditions de suspension du linge sont non atteintes. Le seuil L prédéterminé peut être augmenté à chaque nouvelle tentative.

Le seuil V₃ de vitesse de rotation du tambour 2 est sensiblement compris entre 25 et 45 tours par minute, et préférentiellement de l'ordre de 30 tours par minute.

Dans le cas où la phase de suspension du linge n'est pas détectée, la vitesse de rotation du tambour 2 ne doit pas être augmentée indéfiniment. Au-delà du second seuil V₂ de vitesse de rotation du tambour 2, la phase de suspension du linge ne peut plus se produire et la charge de linge se satellise complètement sur les parois du tambour 2.

Dans ce cas, la phase de suspension du linge a été passée et s'est produite à une vitesse inférieure. Ladite phase de suspension du linge n'a pas été détectée du fait que la valeur du seuil L prédéterminé est trop faible. Alors, la recherche de la phase de suspension du linge est réitérée en augmentant ledit au moins un seuil L prédéterminé. La rotation du tambour 2 n'est pas stoppée de manière à faire retomber le linge. La diminution de la vitesse de rotation en dessous d'un premier seuil V₁ permet de désatelliser la charge de linge et modifier la distribution du linge à l'intérieur du tambour 2.

Dans le cas où après un nombre de tentatives jugé trop important, la phase de suspension du linge ne serait trouvée, la rotation du tambour 2 est stoppée. Soit une cadence inverse de brassage est effectuée pour dérouler un éventuel rouleau de linge qui se serait formé, soit le sens de rotation du tambour 2 est inversé pour la suite du cycle de séchage. Puis, la détection de la phase de suspension du linge peut être reprise.

On va décrire en référence à la figure 5 le procédé de séchage du linge pour une machine à sécher le linge conforme à l'invention.

Le début du procédé de séchage du linge commence par une étape E10 où le tambour 2 est à l'arrêt. La vitesse de rotation du tambour 2 est de 0 tours par minute. Le linge est placé en fond de tambour 2 tel qu'illustré à la figure 2.

Une des conditions E11 pour déclarer le début du procédé de séchage du linge est que le nombre t de tentatives de recherche de l'étape de détection du linge en suspension dans le tambour 2 entraîné en rotation est nul.

La seconde étape E20 du procédé de séchage du linge est une phase de brassage du linge. La vitesse de rotation du tambour 2 est de l'ordre de 30 tours par minute. La phase de brassage du linge, illustrée à la figure 3, permet d'entraîner le linge par les parois du tambour 2 et celui-ci retombe lorsqu'il est en position haute.

A l'étape E30, le compteur t est incrémenté d'un pas pour compter le nombre de tentatives de recherche de l'étape de détection du linge en suspension dans le tambour 2 entraîné en rotation.

Le nombre de mesures de variation de vitesse d sur un palier de vitesse de rotation considéré représenté par la condition E31 est initialisée à 0 pour s'assurer du bon déroulement de la première étape de détection du linge en suspension dans le tambour 2.

La vitesse de rotation du tambour 2 est augmentée jusqu'à une vitesse de rotation correspondant au palier de vitesse V₁ de l'ordre de 40 tours par minute. Cette phase d'augmentation de vitesse de rotation du tambour 2 est illustrée par l'étape E40 pour commencer l'étape de détection du linge en suspension dans le tambour 2 entraîné en rotation.

Ensuite, une phase de mesure de variation de vitesse E50 est démarrée au cours de l'étape de détection du linge en suspension dans le tambour 2. A l'étape E50, le compteur d est incrémenté d'un pas pour compter le nombre de mesures de variation de vitesse au cours de l'étape de détection du linge en suspension dans le tambour 2 entraîné en rotation sur le palier de vitesse de rotation en cours.

Si la mesure de variation de vitesse est inférieure à un seuil L prédéterminé alors la première étape de détection du linge en suspension dans le tambour 2 est suivie de l'étape de suspension du linge par le maintien de la vitesse de rotation du tambour 2 à la vitesse où la condition de suspension du linge est vérifiée. Cette étape conditionnelle est illustrée par la référence E60.

La vitesse de rotation du tambour 2 est maintenue dans la plage de vitesse de rotation comprise entre le premier seuil V₁ et le second seuil V₂ pour mettre en suspension le linge dans le tambour 2. L'étape de suspension du linge est représentée par la référence E70.

Dans un premier mode de réalisation de l'invention, la vitesse de rotation du tambour 2 varie continuellement entre le premier seuil V₁ et le second seuil V₂ au cours de la phase de suspension du linge.

Dans un second mode de réalisation de l'invention, la vitesse de rotation du tambour 2 est fixe au cours de la phase de suspension du linge.

La vitesse de rotation du tambour 2 déterminée lors de l'étape de détection de suspension du linge est conservée lors de l'étape de suspension du linge permettant le séchage du linge par le passage d'air chaud au travers dudit tambour 2.

Le contrôle du maintien de la suspension du linge à l'intérieur du tambour 2 est réalisé par une mesure de variation de vitesse de rotation comparée au dernier seuil L (E90).

Dans un autre mode de réalisation, la phase de suspension du linge est surveillée par un contrôle de la désobstruction des orifices de la virole du tambour 2.

De cette manière, le procédé de séchage permet d'assurer une efficacité optimale du cycle de séchage en garantissant que l'air traversant le tambour 2 est réalisé que lorsque le linge est en suspension.

Dans le cas où le linge n'est plus en suspension, le procédé de séchage commence une nouvelle étape de détection de suspension du linge.

Le contrôle de la désobstruction des orifices de la virole du tambour 2 est réalisé par une mesure d'intensité de fonctionnement dudit au moins un ventilateur 8.

La mesure d'intensité dudit au moins un ventilateur 8 est comparée à un seuil prédéterminé afin de déterminer si le linge est en suspension dans le tambour 2.

Dans le cas où la valeur de mesure de variation de vitesse est supérieure à la valeur seuil L à l'étape E60, les moyens de commande de la machine 1 vérifient à l'étape E120 que le compteur du nombre de mesures d est inférieur à un seuil, en l'occurrence de quatre, pour autoriser une nouvelle mesure de balourd à l'étape E50.

Dans le cas où le nombre de mesure de variation de vitesse E120 est égal au seuil prédéterminé soit quatre à l'étape E120 alors les moyens de commande de la machine 1 contrôlent à l'étape E130 que la vitesse de rotation du tambour 2 n'a pas atteint le second seuil V₂ autorisé de la plage de vitesse de rotation du tambour 2 lors de la première étape de détection du linge en suspension dans le tambour 2.

Si la vitesse de rotation du tambour 2 est inférieure au second seuil V₂ de la plage de vitesse de rotation du tambour 2, alors la première étape de détection du linge en suspension dans le tambour 2 est réitérée suivant une incrémentation d'un pas de vitesse de rotation dudit tambour 2. L'incrémentation de la vitesse de rotation du tambour 2 est par exemple de l'ordre de 5 tours par minute telle que représentée par l'étape E140. Le nombre de mesures d représenté par la condition E141 est initialisée à 0 pour s'assurer du bon déroulement de la première étape de détection du linge en suspension dans le tambour 2. Puis, une nouvelle mesure de variation de vitesse est réalisée à l'étape E50.

Si la vitesse de rotation du tambour 2 est égale au second seuil V₂ de la plage de vitesse de rotation du tambour 2 à l'étape E130, alors les moyens de commande de la machine 1 vérifient à l'étape E150 que le nombre de tentatives t de recherche de l'étape de détection du linge en suspension dans le tambour 2 est égale ou non à un seuil et en l'occurrence de trois.

Dans le cas où le nombre de tentatives de recherche de l'étape de détection du linge en suspension dans le tambour 2 est différent de trois, alors la vitesse de rotation du tambour 2 est diminuée à un seuil V₃ à l'étape E160 pour mettre en oeuvre une phase de distribution du linge à l'étape E170 et recommencer la détection de variation de vitesse de rotation pour au moins un seuil de balourd L prédéterminé différent. Le seuil V₃ de vitesse de rotation du tambour 2 est préférentiellement de l'ordre de 30 tours par minute.

Dans le cas où le nombre de tentatives de recherche de l'étape de détection du linge en suspension dans le tambour 2 est égal à trois, alors le tambour 2 est arrêté à l'étape E180 puis mis en rotation en sens inverse à l'étape E190 avec le dernier seuil L prédéterminé. La vitesse de rotation pour l'inversion de la rotation du tambour 2 est égale au premier seuil V₁ de vitesse de rotation du tambour 2 soit de l'ordre de 40 tours par minute.

Il est bien entendu que les valeurs des vitesses de rotation du tambour précisées pour les paliers de vitesse V₁, V₂ et V₃ sont données à titre indicatif et dépendent du diamètre extérieur du tambour.

La phase de suspension du linge est surveillée par un contrôle de la désobstruction des orifices de la virole du tambour 2.

Dans un mode de réalisation amélioré de l'invention, la phase de suspension du linge est alternée avec une phase de brassage du linge afin d'améliorer le séchage des pièces de linge.

Ainsi, les pièces de linge prennent une position différente à chaque phase de suspension du linge puisque chaque phase de brassage du linge génère une répartition du linge différente à l'intérieur du tambour.

Bien entendu, de nombreuses modifications peuvent être apportées à l'exemple de réalisation décrit précédemment sans sortir du cadre de l'invention.

Par ailleurs, l'invention est applicable à tout type de machine à sécher le linge mais peut également s'appliquer à une lavante-séchante.

## Revendications

1. Procédé de séchage du linge d'une machine à sécher le linge comprenant un tambour rotatif (2), ledit tambour (2) étant logé à l'intérieur d'une carrosserie et contenant le linge à sécher, ledit tambour (2) étant relié à au moins un ventilateur (8) par une conduite (13), et ledit au moins un ventilateur (8) étant relié audit tambour (2) par une conduite (14), ledit procédé comportant simultanément :
- une mise en suspension du linge dans le tambour (2) entraîné en rotation ; et
- une circulation d'air chaud traversant ledit tambour (2),
**caractérisé en ce que** la phase de suspension du linge est précédée d'une étape de recherche de la phase de suspension du linge pendant laquelle la vitesse de rotation du tambour permettant la mise en suspension du linge est déterminée.

2. Procédé de séchage du linge d'une machine à sécher le linge selon la revendication 1, **caractérisé en ce que** la phase de suspension du linge est surveillée par un contrôle de la désobstruction des orifices de la virole du tambour (2).

3. Procédé de séchage du linge d'une machine à sécher le linge selon la revendication 2, **caractérisé en ce que** le contrôle de la désobstruction des orifices de la virole du tambour (2) est réalisé par une mesure d'intensité de fonctionnement dudit au moins un ventilateur (8).

4. Procédé de séchage du linge d'une machine à sécher le linge selon l'une quelconque des revendications 1 à 3, **caractérisé en ce que** la phase de suspension du linge est fonction de la charge de linge et comprise dans une plage de vitesse de rotation du tambour (2) s'étendant entre un premier palier (V₁) et un second palier (V₂).

5. Procédé de séchage du linge d'une machine à sécher le linge selon la revendication 4, **caractérisé en ce que** la vitesse de rotation du tambour (2) varie continuellement entre le premier palier (V₁) et le second palier (V₂) au cours de la phase de suspension du linge.

6. Procédé de séchage du linge d'une machine à sécher le linge selon l'une quelconque des revendications 1 à 4, **caractérisé en ce que** la vitesse de rotation du tambour (2) est fixe au cours de la phase de suspension du linge.

7. Procédé de séchage du linge d'une machine à sécher le linge selon l'une quelconque des revendications 4 à 6, **caractérisé en ce que** le premier palier (V₁) de vitesse de rotation du tambour (2) est sensiblement compris entre 35 et 50 tours par minute, et préférentiellement de l'ordre de 40 tours par minute.

8. Procédé de séchage du linge d'une machine à sécher le linge selon l'une quelconque des revendications 4 à 7, **caractérisé en ce que** le second seuil (V₂) de vitesse de rotation du tambour (2) est sensiblement compris entre 65 et 75 tours par minute, et préférentiellement de l'ordre de 70 tours par minute.

## Patentansprüche

1. Verfahren zum Trocknen der Wäsche eines Wäschetrockners mit einer sich drehenden Trommel (2), wobei diese Trommel (2), die sich in einem Gehäuse befindet und die zu trocknende Wäsche enthält, wobei diese Trommel (2) über eine Leitung (13) mit mindestens einem Lüfter (8) verbunden ist und dieser mindestens eine Lüfter (8) über eine Leitung (14) mit der Trommel (2) verbunden ist und das Verfahren gleichzeitig Folgendes umfasst:
- Schwebendes Umwälzen der Wäsche in der sich drehenden Trommel (2); und
- Zirkulation warmer Luft, welche durch die Trommel (2) geführt wird,
**dadurch gekennzeichnet, dass** der Phase der schwebenden Umwälzung der Wäsche ein Schritt vorgeschaltet ist, in welchem die Phase der Umwälzung der Wäsche ergründet wird, während welcher die Drehgeschwindigkeit der Trommel ermittelt wird, bei welcher die Wäsche schwebend umgewälzt werden kann.

2. Verfahren zum Trocknen von Wäsche eines Wäschetrockners gemäß Anspruch 1, **dadurch gekennzeichnet, dass** die Phase der schwebenden Umwälzung der Wäsche durch eine Kontrolle der Nichtverstopfung der Öffnungen des Klemmrings der Trommel (2) überwacht wird.

3. Verfahren zum Trocknen von Wäsche eines Wäschetrockners gemäß Anspruch 2, **dadurch gekennzeichnet, dass** die Kontrolle der Nichtverstopfung der Öffnungen des Klemmrings der Trommel (2) durch eine Messung der Betriebsintensität des mindestens einen Lüfters (8) erfolgt.

4. Verfahren zum Trocken von Wäsche eines Wäschetrockners gemäß einem der Ansprüche 1 bis 3, **dadurch gekennzeichnet, dass** die Phase der schwebenden Umwälzung der Wäsche von der Wäschemenge abhängig ist und in einem Bereich der Rotationsgeschwindigkeit der Trommel (2) zwischen einer ersten Stufe (V₁) und einer zweiten Stufe (V₂) liegt.

5. Verfahren zum Trocknen von Wäsche eines Wäschetrockners gemäß Anspruch 4, **dadurch gekennzeichnet, dass** die Rotationsgeschwindigkeit der Trommel (2) während der schwebenden Umwälzung der Wäsche ständig zwischen der ersten Stufe (V₁) und der zweiten Stufe (V₂) schwankt.

6. Verfahren zum Trocknen von Wäsche eines Wäschetrockners gemäß einem der Ansprüche 1 bis 4, **dadurch gekennzeichnet, dass** die Rotationsgeschwindigkeit der Trommel (2) sich während der Phase der schwebenden Umwälzung der Wäsche nicht ändert.

7. Verfahren zum Trocknen von Wäsche eines Wäschetrockners nach einem der Ansprüche 4 bis 6, **dadurch gekennzeichnet, dass** die erste Stufe (V₁) der Rotationsgeschwindigkeit der Trommel (2) wesentlich zwischen 35 und 50 Umdrehungen pro Minute und vorzugsweise bei 40 Umdrehungen pro Minute liegt.

8. Verfahren zum Trocknen von Wäsche eines Wäschetrockners nach einem der Ansprüche 4 bis 7, **dadurch gekennzeichnet, dass** die zweite Stufe (V₂) der Rotationsgeschwindigkeit der Trommel (2) wesentlich zwischen 65 und 75 Umdrehungen pro Minute und vorzugsweise bei 70 Umdrehungen pro Minute liegt.

## Claims

1. A method for drying laundry of a laundry dryer comprising a rotating drum (2), said drum (2) being housed inside a body and containing the laundry to be dried, said drum (2) being connected to at least one fan (8) by a conduit (13), and said at least one fan (8) being connected to said drum (2) by a conduit (14), said method simultaneously comprising:
- a suspending of the laundry in the rotated drum (2); and
- a circulation of warm air through said drum (2),
**characterized in that** the phase of suspending the laundry is preceded by a research step of the phase of suspending the laundry, during which the rotational velocity of the drum enabling the suspending of the laundry is determined.

2. A method for drying laundry of a laundry dryer according to claim 1, **characterized in that** the phase of suspending the laundry is monitored by checking that the orifices of the shell of the drum (2) are unobstructed.

3. A method for drying laundry of a laundry dryer according to claim 2, **characterized in that** the checking that the orifices of the shell of the drum (2) are unobstructed is carried out by measuring the operating intensity of said at least one fan (8).

4. A method for drying laundry of a laundry dryer according to any one of the claims 1 to 3, **characterized in that** the phase of suspending the laundry depends on the laundry load and is within a rotational velocity range of the drum (2) that extends between a first level (V₁) and a second level (V₂).

5. A method for drying laundry of a laundry dryer according to claim 4, **characterized in that** the rotational velocity of the drum (2) varies continually between the first level (V₁) and the second level (V₂) during the phase of suspending the laundry.

6. A method for drying laundry of a laundry dryer according to any one of the claims 1 to 4, **characterized in that** the rotational velocity of the drum (2) is fixed during the phase of suspending the laundry.

7. A method for drying laundry of a laundry dryer according to any one of the claims 4 to 6, **characterized in that** the first rotational velocity level (V₁) of the drum (2) is substantially between 35 and 50 revolutions per minute, and preferentially of the order of 40 revolutions per minute.

8. A method for drying laundry of a laundry dryer according to any one of the claims 4 to 7, **characterized in that** the second rotational velocity level (V₂) of the drum (2) is substantially between 65 and 75 revolutions per minute, and preferentially of the order of 70 revolutions per minute.
